# EUROPEAN PATENT APPLICATION

(11) **EP 4 545 609 A1**
(43) Date of publication of application: **30.04.2025**
(21) Application number: 23831259.9
(22) Date of filing: 22.06.2023
(51) Int. Cl.: C09D 11/18, B43K 7/00

(54) **OIL-BASED INK COMPOSITION FOR BALLPOINT PEN**

(30) Priority: 27.06.2022 JP 2022102846
(71) Applicant: MITSUBISHI PENCIL COMPANY, LIMITED, Tokyo 140-8537 (JP)
(72) Inventor: MINOBE, Yumiko, Tokyo 140-8537 (JP)
(74) Representative: Vossius & Partner Patentanwälte Rechtsanwälte mbB
(86) International application number: PCT/JP2023/023092
(87) International publication number: WO 2024/004815

(57) **Abstract**

Provided are an oil-based ink composition for a ballpoint pen and an oil-based ballpoint pen, which is excellent in the effect of suppression of dripping phenomenon, have good initial property (not faint at the time of writing), have a quick drying property, have no ink stretch at the time of rubbing because of dripping, have improved line skipping, and thus can secure a stable ink flow amount regardless of the ink flow amount design of the tip, and can also improve the bleed-through property because of the suppression of the dripping and the quick drying property. The oil-based ink composition for a ballpoint pen is an oil-based ink composition for a ballpoint pen including at least a colorant, a resin component, a solvent, and water, wherein a content of the solvent and water is 40 mass% or more with respect to a total amount of the ink composition, when a resin having a mass-average molecular weight of 40,000 or more is contained as the resin component, a content of the resin component is 0.5 mass% or less with respect to the total amount of the ink composition, a weight reduction rate A when the ink composition is allowed to stand in an open state for 2 hours under an environment of 50°C and a relative humidity of 35±5%RH is 25% or more, and a ratio A/B of the weight reduction rate A to a weight reduction rate B when the ink composition is allowed to stand in an open state for 2 hours under an environment of 50°C and a relative humidity of 85±5%RH is 0.8 to 1.2. The oil-based ballpoint pen is equipped with the oil-based ink composition for a ballpoint pen.

## Description

### Technical Field

The present specification relates to an oil-based ink composition for a ballpoint pen and an oil-based ballpoint pen.

### Background Art

In general, the writing feeling of an oil-based ballpoint pen tends to be relatively heavy. To improve this, as a known technique, there is a case where an ink is designed to have a low viscosity, for example, a viscosity of about 1000 mPa·s at 5 rpm. However, the quality such as reduction in dripping was insufficient in such a case.

To overcome such a problem, there has been known an oil-based ink composition for a ballpoint pen that suppresses the dripping phenomenon and makes writing feeling smooth in an oil-based ballpoint pen. For example, there have been known (a) an oil-based ink including at least a colorant, one or a plurality of solvents selected from propylene glycol monomethyl ether, dipropylene glycol monomethyl ether, and aliphatic alcohols having 4 or less carbon atoms, and a resin having a hydrophilic group and a resin having a hydrophobic group which are soluble in the solvents and incompatible with each other (see, for example, Patent Document 1);
(b) a low-viscosity oil-based ballpoint pen including a ballpoint pen refill in which an ink storage tube communicates with a tip holding a tip ball via a joint, wherein the ink storage tube includes a low-viscosity oil-based ballpoint pen ink having an ink viscosity of 300 mPa·s (20 rpm, 25°C) or less and a TI value (5 rpm/20 rpm, 25°C) of 1.1 or more, the low-viscosity oil-based ballpoint pen ink including a solvent containing 60 wt.% or more of an organic solvent having a vapor pressure of 0.2 mmHg (25°C) or less, a colorant, and an additive, and a follower filled in a rear end surface of the ink, the tip ball is in close contact with an inner edge of a ball holding portion at a tip end when writing is not performed, and the tip has a spring therein that constantly presses the tip ball so that the close contact state is released when writing is performed (see, for example, Patent Document 2 which is a prior application filled by the present applicant);
(c) A low-viscosity oil-based ballpoint pen including a refill formed by filling an ink storage tube with (1) a low-viscosity oil-based ballpoint pen ink containing 60 wt. % or more of an organic solvent having a vapor pressure of 0.1 mmHg (20°C) or less, a colorant, and an additive and having an ink viscosity of 200 mPa·s or less at a shear rate of 400 S⁻¹ and 300 mPa ·s or more at a shear rate of 5 s⁻¹ and (2) a follower containing at least one solvent selected from the group consisting of a hardly volatile organic solvent and a nonvolatile organic solvent, a gelling agent formed of fine particle silica, and a silane-based surface modifier, the follower being filled at an end surface of the ink (see, for example, Patent Document 3 which is a prior application filled by the present applicant); and
(d) An oil-based ink for a ballpoint pen containing at least an oil-soluble resin, an oil-soluble dye, a glycol ether-based solvent having a boiling point in the range of 160°C to 200°C, and ethylene glycol monopropyl ether (see Patent Document 4).

In the oil-based ballpoint pens equipped with the known various oil-based ink compositions described above, the stringiness of the ink is enhanced by combining resin species contained in the ink, other components, and the like to collect the excess ink around the tip into the tip as the mechanism of improving dripping.

However, in this method, there is a problem in that the excess ink not collected in the tip accumulates in the vicinity of the caulking of the tip as the writing proceeds and drips on the drawn line as a large dripping, and thus the quality of the drawn line is deteriorated and the effect of reducing the dripping is still insufficient. In particular, even in the case of an ink designed to have a low ink viscosity in order to smooth the writing feeling, the effect of improving the dripping is small, and in addition to the effect of further improving the dripping, further improvement in the smooth writing feeling, the initial writing property (not faint at the time of writing), and further improvement in so-called line skipping in which a part of a solid line is passed to form a dotted line or a part is largely removed or blurred when writing is performed.

### Citation List

### Patent Document

Patent Document 1: JP 4-139273 A (Claims, Examples, etc.)
Patent Document 2: JP 8-192594 A (Claims, Examples, etc.)
Patent Document 3: JP 8-134392 A (Claims, Examples, etc.)
Patent Document 4: JP 2009-197205 A (Claims, Examples, etc.)

### Summary of Invention

### Technical Problem

The present disclosure has been made in view of the problems, the current state, and the like of the related art, and an object thereof is to provide an oil-based ink composition for a ballpoint pen that can suppress dripping phenomenon to a minimum, has a smooth writing feeling, has a good initial writing property (not getting faint at the time of writing), has improved line skipping, and thus can secure a stable ink flow amount regardless of the ink flow amount design of the tip, and an oil-based ballpoint pen equipped with the oil-based ink composition. Solution to Problem

The present discloser has conducted intensive studies in view of the above problems in the related art, and as a result, has found that the oil-based ink composition for a ballpoint pen and the oil-based ballpoint pen as the object can be obtained by, in an oil-based ink composition for a ballpoint pen including at least a colorant, a resin component, a solvent, and water, optimizing the content of the resin component and the content of the solvent and water, setting the ratio of the weight reduction rate under two measurement conditions as ink physical properties to a predetermined range, and has completed the present disclosure.

That is, an oil-based ink composition for a ballpoint pen of the present disclosure is an oil-based ink composition for a ballpoint pen including at least a colorant, a resin component, a solvent, and water, wherein a content of the solvent and water is 40 mass% or more with respect to a total amount of the ink composition, when a resin having a mass-average molecular weight of 40,000 or more is contained as the resin component, a content of the resin component is 0.5 mass% or less with respect to the total amount of the ink composition, a weight reduction rate A when the ink composition is allowed to stand in an open state for 2 hours under an environment of 50°C and a relative humidity of 35±5%RH is 25% or more, and a ratio A/B of the weight reduction rate A to a weight reduction rate B when the ink composition is allowed to stand in an open state for 2 hours under an environment of 50°C and a relative humidity of 85±5 %RH is 0.8 to 1.2.

It is preferable to contain a resin having a mass-average molecular weight of less than 40,000 as the resin component.

The oil-based ink composition for a ballpoint pen preferably has a viscosity of 1 to 200 mPa·s at a shear rate between 200 and 2000 s⁻¹ as measured at 25°C with a rheometer when a cone plate is used, and preferably has a ratio represented by a viscosity at a shear rate of 20 s⁻¹/a viscosity at a shear rate of 200 s⁻¹ at 25°C of 0.90 to 1.10 as measured with a rheometer.

An oil-based ballpoint pen is characterized in that it is equipped with the oil-based ink composition for a ballpoint pen having the above-described formulation.

### Advantageous Effects of Invention

According to the present disclosure, there are provided an oil-based ink composition for a ballpoint pen and an oil-based ballpoint pen, which can suppress the dripping phenomenon to a minimum, have good initial property (not faint at the time of writing), have a quick drying property, have no ink stretch at the time of rubbing because of dripping, have improved line skipping. Thus, it can secure a stable ink flow amount regardless of the ink flow amount design of the tip, and can also improve the bleed-through property because of the suppression of the dripping and the quick drying property.

The object and effects of the present disclosure can be recognized and obtained especially using the components and combinations indicated in the claims. Both general explanation described above and detailed explanation described below are exemplary and explanatory and do not limit the present disclosure described in the claims.

### Brief Description of Drawings

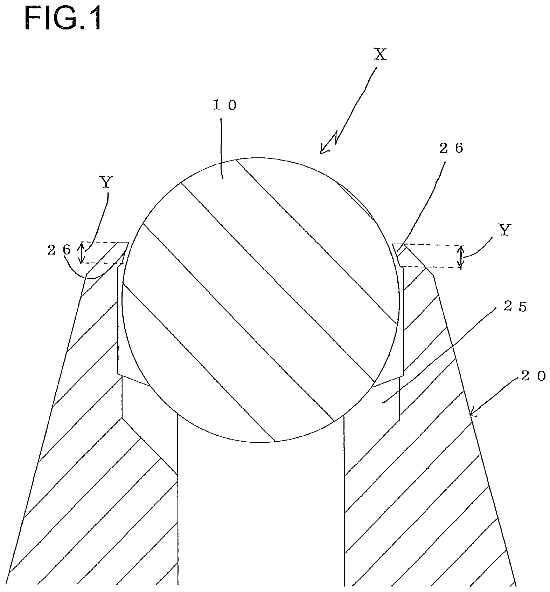

FIG. 1 is a longitudinal sectional view illustrating an example of a main part of a ballpoint pen tip of an oil-based ballpoint pen equipped with an oil-based ink composition for a ballpoint pen of the present disclosure.

### Description of Embodiments

Embodiments of the present disclosure will be described below in detail. It should be noted that the technical scope of the present disclosure is not limited to the embodiments detailed below but includes the disclosure described in claims and equivalents thereof.

An oil-based ink composition for a ballpoint pen of the present disclosure is an oil-based ink composition for a ballpoint pen including at least a colorant, a resin component, a solvent, and water, wherein
a content of the solvent and water is 40 mass% or more with respect to a total amount of the ink composition,
when a resin having a mass-average molecular weight of 40,000 or more is contained as the resin component, a content of the resin component is 0.5 mass% or less with respect to the total amount of the ink composition,
a weight reduction rate A when the ink composition is allowed to stand in an open state for 2 hours under an environment of 50°C and a relative humidity of 35±5%RH is 25% or more, and a ratio A/B of the weight reduction rate A to a weight reduction rate B when the ink composition is allowed to stand in an open state for 2 hours under an environment of 50°C and a relative humidity of 85±5 %RH is 0.8 to 1.2.

### <Colorant>

Examples of the colorant that can be used include inorganic pigments and organic pigments, and these can be used alone or in combination of two or more.

Examples of the inorganic pigment include carbon black, titanium oxide, zinc oxide, red iron oxide, chromium oxide, black iron, cobalt blue, alumina white, yellow iron oxide, viridian, zinc sulfide, cadmium yellow, vermilion, cadmium red, chrome yellow, molybdate orange, zinc chromate, strontium chromate, white carbon, clay, talc, ultramarine blue, barite powder, white lead, Prussian blue, manganese violet, aluminum powder, and brass powder.

Examples of the organic pigment include at least one (a mixture of each one or two or more thereof, the same applies hereinafter) of azo lake, insoluble azo pigments, chelate azo pigments, phthalocyanine pigments, perylene and perylene pigments, anthraquinone pigments, quinacridone pigments, lake dyes nitro pigments, and nitroso pigments.

It is also possible to use at least one colorant such as an acid dye, a reactive dye, a basic dye, a dispersible dye, a direct dye, a fluorescent dye, C.I. Basic Yellow 35, C.I. Basic Yellow 40, C.I. Acid Orange 28, C.I. Acid Blue 92, Eosin, Phloxine, Water Yellow #6-C, Acid Red, Water Blue #105, Brilliant Blue FCF, Nigrosin NB, Direct Black 154, Direct Sky Blue 5B, Violet BB Rhodamine, or methyl violet.

Further, at least one of a processed pigment whose surface is modified with a resin, or a surfactant, a dispersion toner, a colorant obtained by coloring an acrylic resin, a benzoguanamine resin, or the like with a pigment or a dye to form fine particles, a thermochromic microcapsule pigment, a photochromic microcapsule pigment, and the like can also be used.

The content of these colorants varies depending on the oil-based ballpoint pen type, the ink storage form (batting type, direct liquid type), dispersibility, storage stability, and the like, but is about 0.5 to 40 mass% with respect to the total amount of the ink composition.

### <Resin component>

Examples of the resin component used in the present disclosure include polyvinyl butyral, a ketone resin, polyvinyl pyrrolidone, a polyacetal resin, a polyvinyl alcohol resin, a cellulose resin, a terpene resin, an alkyd resin, a phenoxy resin, a polyvinyl acetate resin, a maleic acid resin, a styrene maleic acid resin, an alkylphenol resin, a rosin modified resin, a terpene phenol resin, and a styrene acrylic resin. These may be used alone or in combination of two or more (hereinafter, simply referred to as "at least one").

In the present disclosure, when a resin having a mass-average molecular weight of 40,000 or more is used as the resin component in terms of suppression of dripping and line skipping, the content of the resin component is 0.5 mass% or less in terms of the solid content with respect to the total amount of the ink composition. It is desirable that the content is preferably 0.4 mass% or less, and more preferably 0 (zero) to 0.3 mass%. In the present disclosure, when the content of the resin having a mass-average molecular weight of 40,000 or more exceeds the above range, it is difficult to exhibit the effect of the present disclosure, and line skipping may occur, which is not preferable.

As a preferable resin component, it is desirable to use a resin having a mass-average molecular weight of less than 40,000. From the viewpoint of further suppression of dripping, and from the viewpoint of further line skipping, at least one of polyvinyl butyral, a ketone resin, polyvinyl pyrrolidone, a polyacetal resin, a polyvinyl alcohol resin, a cellulose resin, a terpene resin, an alkyd resin, a phenoxy resin, a polyvinyl acetate resin, a maleic acid resin, a styrene maleic acid resin, an alkylphenol resin, a rosin modified resin, a terpene phenol resin, and a styrene acrylic resin having a mass-average molecular weight of less than 40,000 is exemplified.

Among these, it is preferable to use polyvinyl butyral, a ketone resin, or polyvinyl pyrrolidone having a mass-average molecular weight of less than 40,000, and it is further desirable to use polyvinyl butyral or a ketone resin having a mass-average molecular weight of 20, 000 or less. In the present disclosure, a value measured in terms of styrene by a GPC method is used as the mass-average molecular weight.

Here, the polyvinyl butyral resin is obtained by reacting polyvinyl alcohol (PVA) with butyraldehyde (BA), and the resin has a structure of a butyral group, an acetyl group, and a hydroxyl group.

Specific examples of the resin that can be used include polyvinyl butyral such as trade name; Polyvinyl Butyral BL-1, BL-10, BM-1, BM-5, and BH-3 manufactured by SEKISUI CHEMICAL CO., LTD., and Mowital B14S and B30T manufactured by KURARAY CO., LTD.

Examples of the ketone resin include trade name; KETONERESIN K-90 manufactured by ARAKAWA CHEMICAL INDUSTRIES, LTD. and Resin SK manufactured by Degussa AG.

Examples of polyvinylpyrrolidone include trade name; PITZCOL K-17 manufactured by DKS Co. Ltd., and trade name: PVP K90 manufactured by Ashland Inc.

From the viewpoint of suppression of dripping and line skipping, a resin having a viscosity of preferably 1000 mPa·s or less, more preferably 500 mPa·s or less at 25°C and measured with a rheometer under shear rate of 100 s⁻¹ when dissolved at 10 mass% in 3-methyl-3-methoxy-1-butanol is preferable.

When the resin having a mass-average molecular weight of 40,000 or more is used, the content of these resin components (solid content) is 0.5 mass% or less in terms of solid content with respect to the ink composition. The content of other resin components (solid content) varies depending on the oil-based ballpoint pen type, the ink storage form (batting type, direct liquid type), dispersibility, storage stability, and the like, but is preferably 25 mass% or less, more preferably 15 mass% or less, and particularly preferably 1 to 5 mass% in terms of solid content with respect to the total amount of the ink composition.

When the content of the resin other than the resin having a mass average molecular weight of 40000 or more in the total amount of the ink is 25% by mass or less, the dripping can be suppressed. On the other hand, when the content is more than 25% by mass, the dripping is likely to occur, and the line skipping and the initial writing property tend to deteriorate.

### <Solvent>

As the solvent in the present disclosure, for example, aromatics, alcohols, polyhydric alcohols, glycol ethers, hydrocarbons, esters, and the like can be used. These solvents may be used alone or two or more in combination.

The following can be used as the aromatic: for example, benzyl alcohol, ethylene glycol monophenyl ether, ethylene glycol monobenzyl ether, propylene glycol monophenyl ether, diethylene glycol monophenyl ether, an alkylsulfonic phenyl ester, butyl phthalate, ethylhexyl phthalate, tridecyl phthalate, ethylhexyl trimellitate, diethylene glycol dibenzoate, or dipropylene glycol dibenzoate.

The following can be used as the alcohol: for example, ethanol, n-propanol, isopropanol, n-butanol, isobutanol, tert-butyl alcohol, 1-pentanol, isoamyl alcohol, sec-amyl alcohol, 3-pentanol, tert-amyl alcohol, n-hexanol, methyl amyl alcohol, 2-ethylbutanol, n-heptanol, 2-heptanol, 3-heptanol, n-octanol, 2-octanol, 2-ethylhexanol, 3,5,5-trimethylhexanol, nonanol, n-decanol, undecanol, n-decanol, trimethylnonyl alcohol, tetradecanol, heptadecanol, cyclohexanol, or 2-methylcyclohexanol.

The following can be used as the polyhydric alcohol: for example, ethylene glycol, diethylene glycol, 3-methyl-1,3butanediol, triethylene glycol, dipropylene glycol, 1,3propanediol, 1,3butanediol, 1,5pentanediol, hexylene glycol, or octylene glycol.

The following can be used as the glycol ether: for example, methyl isopropyl ether, ethyl ether, ethyl propyl ether, ethyl butyl ether, isopropyl ether, butyl ether, hexyl ether, 2-ethyl hexyl ether, ethylene glycol monohexyl ether, ethylene glycol mono-2-ethyl butyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monobutyl ether, tetraethylene glycol monobutyl ether, 3-methyl-3-methoxy-1-butanol, 3-methoxy-1-butanol, propylene glycol monomethyl ether, propylene glycol monoethyl ether, propylene glycol monopropyl ether, propylene glycol monobutyl ether, propylene glycol tertiary butyl ether dipropylene glycol monomethyl ether, dipropylene glycol monoethyl ether, dipropylene glycol monopropyl ether, dipropylene glycol monobutyl ether, tripropylene glycol monomethyl ether, tripropylene glycol monobutyl ether, or tetrapropylene glycol monobutyl ether.

The following can be used as the hydrocarbon: for example, a linear hydrocarbon, such as hexane, isohexane, heptane, octane, nonane, or decane; or a cyclic hydrocarbon, such as cyclohexane, methylcyclohexane, or ethylcyclohexane.

The following can be used as the ester: for example, propylene glycol methyl ether acetate, propylene glycol diacetate, 3-methyl-3-methoxybutyl acetate, propylene glycol ethyl ether acetate, ethylene glycol ethyl ether acetate, butyl formate, isobutyl formate, isoamyl formate, propyl acetate, butyl acetate, isopropyl acetate, isobutyl acetate, isoamyl acetate, methyl propionate, ethyl propionate, propyl propionate, isobutyl propionate, isoamyl propionate, methyl butyrate, ethyl butyrate, propyl butyrate, methyl isobutyrate, ethyl isobutyrate, propyl isobutyrate, methyl valerate, ethyl valerate, propyl valerate, methyl isovalerate, ethyl isovalerate, propyl isovalerate, methyl trimethylacetate, ethyl trimethylacetate, propyl trimethylacetate, methyl caproate, ethyl caproate, propyl caproate, methyl caprylate, ethyl caprylate, propyl caprylate, methyl laurate, ethyl laurate, methyl oleate, ethyl oleate, triglyceride caprylate, tributyl citrate acetate, octyl oxystearate, propylene glycol monoricinoleate, methyl 2-hydroxyisobutyrate, or 3-methoxybutyl acetate.

Preferably, among these solvents, it is desirable to use solvents having a vapor pressure of 100 Pa or more at 25°C from the viewpoint of suppression of dripping and drying of drawn line . More preferably, it is desirable to use a solvent having a vapor pressure of 1000 Pa or more at 25°C, and still more preferably a solvent having a vapor pressure of 5000 Pa or more at 25°C.

Examples of the solvent that can be particularly preferably used include 3-methoxy-3-methyl-1-butanol (25°C, vapor pressure: 125 Pa), propylene glycol monomethyl ether (25°C, vapor pressure: 1667 Pa), ethyl alcohol (25°C, vapor pressure: 7906 Pa), isopropyl alcohol (25°C, vapor pressure: 5870 Pa), and xylene (25°C, vapor pressure: 1121 Pa). The content of the solvents is preferably 30 to 80 mass%, and preferably 40 to 70 mass% with respect to the total amount of the ink composition.

In the present disclosure, it is desirable to contain water, and any of purified water, ion-exchanged water, pure water, ultrapure water, and the like may be used. The content is specifically 0.5 to 10 mass% with respect to the total amount of the ink composition. The ballpoint pen refill to be equipped with the oil-based ink composition for a ballpoint pen of the present disclosure gradually absorbs moisture in the air when left to stand for a long time. Thus, by adding water in advance, a change in physical properties due to moisture absorption can be suppressed. From this point of view, it is desirable to contain water.

In the present disclosure, the total content of the solvent and water needs to be 40 mass% or more with respect to the total amount of the ink composition, and the total content is preferably 40 to 80 mass%. When the total content of the solvent and water is less than 40 mass%, the volatility of the ink is lowered, and thus the dripping around the caulking is easily accumulated, which is not preferable.

### <Additional component>

The oil-based ink composition for a ballpoint pen of the present disclosure may contain additional components in an appropriate amount as long as the effect of the present disclosure is not impaired. Examples of the additional component include leveling agents, antirust agents, preservatives, and lubricants.

Examples of the leveling agent that can be used include fluorine-based surfactants, silicone-based surfactant, and phosphate ester-based surfactants. Examples of the lubricant include phosphate esters.

The oil-based ink composition for a ballpoint pen of the present disclosure is an oil-based ink composition for a ballpoint pen including at least a colorant, a resin component, a solvent, and water, wherein a content of the solvent and water is 40 mass% or more with respect to a total amount of the ink composition, when a resin having a mass-average molecular weight of 40,000 or more is contained as the resin component, a content of the resin component is 0.5 mass% or less with respect to the total amount of the ink composition, a weight reduction rate A when the ink composition is allowed to stand in an open state for 2 hours under an environment of 50°C and a relative humidity of 35±5%RH is 25% or more, and a ratio A/B of the weight reduction rate A to a weight reduction rate B is 0.8 to 1.2 where B is the weight reduction rate when the ink composition is allowed to stand in an open state for 2 hours under an environment of 50°C and a relative humidity of 85±5 %RH.

Setting the weight reduction rate A to 25% or more and setting the ratio A/B of the weight reduction rates to 0.8 to 1.2 makes it possible to efficiently exhibit the effect of the present disclosure, specifically, ink drying property for suppression of dripping is obtained, and at the same time, good initial writing property can be maintained.

In the present disclosure, the reason of the difference in the measured humidity of each of the weight reduction rates A and B is to ensure that certain volatility is maintained both in a dry environment and in an environment of high humidity.

When the weight reduction rate A is less than 25%, the quick drying property deteriorates.

When the ratio A/B of the weight reduction rates is less than 0.8, the drying properties of drawn line deteriorate, and on the other hand, when the ratio A/B is more than 1.2, the long-term stability of the ink deteriorates.

The ratio A/B of the weight reduction rates can be set within the predetermined range by adjusting the amount and the solid content of the solvent having a vapor pressure of 100 Pa or more at 25°C.

Further, in order to further exhibit the effect of the present disclosure, that is, in order to suppress the dripping phenomenon to a minimum, to highly achieve a smooth writing feeling, and to further exhibit the effect of the present disclosure, the oil-based ink composition for a ballpoint pen preferably satisfies the following conditions 1) and 2) .
1) having an ink viscosity of 1 to 200 mPa·s at 25°C and a shear rate between 200 and 2000 s⁻¹
2) having a ratio of a ink viscosity at a shear rate of 20 s⁻¹/a viscosity at a shear rate of 200 s⁻¹ of 0.90 to 1.10 measured with a rheometer (MCR302, manufactured by Anton Paar GmbH) at 25°C using a cone plate (CP25-1, manufactured by Anton Paar GmbH).

The condition that the ink viscosity is 200 mPa·s or less in 1) relates to the occurrence of the dripping phenomenon. Further satisfying this condition makes it possible to achieve further suppression of the dripping phenomenon and good initial writing property.

More preferably, the ink viscosity is 1 to 110 mPa·s at 25°C and a shear rate between 200 and 2000 s⁻¹.

The condition that the ratio is 0.90 to 1.10 in 2) relates to the amount of the dye pigment or the resin and the proportion of the volatile solvent. When this condition is further satisfied, the suppression of the dripping phenomenon can be further improved.

The oil-based ink composition for a ballpoint pen that satisfies the conditions 1) and 2) can be prepared by preferably selecting the colorant type, the resin type, and the solvent type to be used, optimizing the content of each components, and preferably combining a kneading method to be described later.

The oil-based ink composition for a ballpoint pen of the present disclosure can be produced according to a method for producing other oil-based ink composition.

That is, the oil-based ink composition for a ballpoint pen of the present disclosure including at least the colorant, a resin component, a solvent, and water is produced by the following process; the content of the resin component is set to 6 mass% or less with respect to the total amount of the ink composition, the content of the solvent and water is set to 40 mass% or more with respect to the total amount of the ink composition, and additional components are appropriately combined according to the application of the ink for a ballpoint pen, and mixing and stirring are performed with stirring conditions set to suitable conditions using a mixer or the like, for example, a bead mill, a homomixer, or, a homogenizer capable of applying strong shear, and as necessary, coarse particles in the ink composition are removed by filtration or centrifugation.

The oil-based ink composition for a ballpoint pen of the present disclosure is, for example, mounted on a ballpoint pen including a pen tip portion such as a ballpoint pen tip.

Examples of the ballpoint pen in the present disclosure include those in which the oil-based ink composition for a ballpoint pen having the above composition is contained in an ink container (refill) for a ballpoint pen. For example, the ballpoint pen can be prepared by charging the oil-based ink composition for a ballpoint pen into an oil-based ballpoint pen body provided with a ballpoint pen tip having a ball with a diameter of 0.18 to 2.0 mm, preferably a diameter of 0.28 to 1.0 mm.

In the oil-based ballpoint pen equipped with the oil-based ink composition for a ballpoint pen having the physical properties of the present disclosure, to further suppress the dripping phenomenon from the structural aspect of the ballpoint pen, in the structure of the ballpoint pen tip X fixed to the tip of the ink container (refill), for example, as illustrated in FIG. 1, a ball 10 and a holder 20 for holding the ball 10 are provided, a ball house 25 for storing the ball 10 is provided in the vicinity of the tip of the holder 20, a caulking portion 26 for preventing the ball 10 stored in the ball house 25 from jumping out of the ball house 25 is provided at the tip of the holder 20. The length of the seal surface Y between the inner peripheral surface of the caulking portion 26 and the ball 10 is preferably 20 to 170 µm, and the diameter of the ball 10 is also preferably 0.28 to 1.0 mm. As a result, from the structural aspect of the ballpoint pen in combination with the characteristics of the oil-based ink composition for a ballpoint pen, the residual oil-based ink does not accumulate in the vicinity of the caulking of the tip as a writing proceeds. Thus, the ink is not dripping and falling on the drawing line, the drawing line quality is also improved, and the effect of reducing the dripping can be further enhanced. By further optimizing the solvent type and the contents of the solvent, moisture, and the like in the ink composition, and by further satisfying the conditions 1) to 2) described above, the excess ink which has not been transferred to the paper surface and affects the dripping is further controlled, and the ink lump adhering to the vicinity of caulking is not increased.

The structure of the ballpoint pen is not particularly limited, and the oil-based ballpoint pen may be, for example, a direct liquid type ballpoint pen provided with a collector structure (ink holding mechanism) using a barrel itself as an ink container in which the barrel is filled with the oil-based ink composition for a ballpoint pens having the configuration described above.

The oil-based ink composition for a ballpoint pen of the present disclosure configured as described above is an oil-based ink composition for a ballpoint pen including at least a colorant, a resin component, a solvent, and water, wherein a content of the solvent and water is 40 mass% or more with respect to a total amount of the ink composition, when a resin having a mass-average molecular weight of 40,000 or more is contained as the resin component, a content of the resin component is 0.5 mass% or less with respect to the total amount of the ink composition, a weight reduction rate A when the ink composition is allowed to stand in an open state for 2 hours under an environment of 50°C and a relative humidity of 35±5%RH is 25% or more, and a ratio A/B of the weight reduction rate A to a weight reduction rate B when the ink composition is allowed to stand in an open state for 2 hours under an environment of 50°C and a relative humidity of 85±5 %RH is 0.8 to 1.2. Thus, the ink composition can secure that a certain volatility is maintained under a dry environment and in an environment with high humidity. Such an oil-based ink composition for a ballpoint pen and an oil-based ballpoint pen can suppress the dripping phenomenon to a minimum, have good initial property (not faint at the time of writing), have a quick drying property, have no ink stretch at the time of rubbing because of dripping, and, have improved line skipping, and thus can secure a stable ink flow regardless of the ink flow amount design of the tip, and can also improve the bleed-through property because of the suppression of the dripping and the quick drying property.

Further, in the oil-based ink composition for a ballpoint pen, the viscosity measured with a rheometer at the time of using a cone plate at 25°C is 1 to 200 mPa·s at a shear rate between 200 and 2000 s⁻¹, and the ratio represented by the viscosity at a shear rate of 20 s⁻¹/the viscosity at a shear rate of 200 s⁻¹ measured with the rheometer at 25°C is set to 0.90 to 1.10. Thus, even though excess ink discharged from the tip is not collected, and the ink has accumulated in the vicinity of the caulking, the ink volatiles, and writing can be performed without having dripping. Therefore, the suppression of dripping phenomenon to a minimum and the smooth writing feeling are highly compatible, and the effect of the present disclosure is further exhibited.

The oil-based ink composition for a ballpoint pen of the present disclosure and an oil-based ballpoint pen equipped with the ink composition are very good in the long-lasting effect for exhibiting the action and effect of the present disclosure, having a long period of expression and long duration of the effect, and are excellent in stability over time.

### Examples

Next, the present disclosure will be described in more detail with reference to Examples 1 to 14 and Comparative Examples 1 to 6 of an oil-based ink composition for a ballpoint pen and an oil-based ballpoint pen equipped with the ink composition, but the present disclosure is not limited to the following Examples and the like.

### [Examples 1 to 14 and Comparative Examples 1 to 6]

Each oil-based ink composition for a ballpoint pen was prepared by heating and stirring at 60°C after the materials were charged according to the blending formulation of a colorant, a resin component, a solvent, and water shown in the following Table 1. The resin component is represented by the solid content. For the resin to be used, the viscosity of a 3-methyl-3-methoxy-1-butanol solution in which 10 mass% of the resin was dissolved measured by a rheometer (manufactured by Anton Paar GmbH) at 100 s⁻¹ at 25°C was described out of Table 1 (*8 to *13). For each obtained oil-based ink composition for a ballpoint pen (total amount: 100 mass%), the weight reduction rate A and the weight reduction rate B of each oil-based ink composition for a ballpoint pen were determined by each of the following measurement methods, and the ratio A/B was calculated.

In addition, by the following measurement methods, the ink viscosity of each obtained oil-based ink composition for a ballpoint pen measured by a rheometer (MCR302, manufactured by Anton Paar GmbH) when a cone plate (CP25-1, manufactured by Anton Paar GmbH) was used at 25°C and at a shear rate between 200 and 2000 s⁻¹, and measured by a rheometer (MCR302, manufactured by Anton Paar GmbH) when a cone plate (CP25-1, manufactured by Anton Paar GmbH) was used at 25°C and at a shear rate of 20 s⁻¹. The ratio represented by the viscosity at a shear rate of 20 s⁻¹/the viscosity at a shear rate of 200 s⁻¹ was calculated. Further, an oil-based ballpoint pen having the following structure was produced, and evaluation for suppression of the dripping phenomenon, and evaluation for the effect of improving initial writing property (not faint at the time of writing), quick drying property, line skipping, and bleed-through property were performed by the following evaluation methods.

The results are shown in Table 1 below.

### [Method for measuring weight reduction rate A and weight reduction rate B]

Each obtained oil-based ink composition for a ballpoint pen in an amount of 1 g was put in a metal container having a diameter of 4.5 cm, and the weight reduction rate A when the ink composition was allowed to stand in an open state for 2 hours under an environment of 50°C and a relative humidity of 35±5%RH was determined. In the same manner, using the metal container, the weight reduction rate B when the ink composition was allowed to stand in an open state for 2 hours under an environment of 50°C and a relative humidity of 85±5%RH was obtained. The ratio A/B between the weight reduction rate A and the weight reduction rate B was calculated.

### [Method for measuring ink viscosity value at 25°C and a shear rate between 200 and 2000 s⁻¹: ratio represented by the viscosity at a shear rate of 20⁻¹/the viscosity at a shear rate of 200 s⁻¹ measured with a rheometer (MCR302, manufactured by Anton Paar GmbH) at 25°C when a cone plate (CP25-1, manufactured by Anton Paar GmbH) is used]

For each obtained oil-based ink composition for a ballpoint pen, each ink viscosity value was measured at 25°C and a shear rate between 200 and 2000 s⁻¹ using a rheometer (MCR302, manufactured by Anton Paar GmbH) at the time of using a cone plate (CP25-1, manufactured by Anton Paar GmbH), and a ratio representing the ratio (shear rate of 20 s⁻¹/shear rate of 200 s⁻¹) was calculated.

### (Preparation of oil-based ballpoint pen)

Oil-based ballpoint pens (five for each example) were prepared by using an shaft for an oil-based ballpoint pen [manufactured by MITSUBISHI PENCIL COMPANY, LIMITED, trade name: SA-R], charging each obtained oil-based ink composition in each refill formed of a polypropylene ink container having an inner diameter of 1.7 mm and a length of 115 mm and a ballpoint pen tip (holder: made of stainless steel, ball: cemented carbide ball, ball diameter: 0.7 mm), a clearance (gap) between a ball and a caulking portion of 13 µm, a sealing surface of 70 µm, and a joint connecting the storage tube and the tip.

### (Method for evaluating effect of suppression of dripping phenomenon)

A writing test was performed by spirally writing on a writing test paper in accordance with JIS standard P3201 using the oil-based ballpoint pen, under the conditions of a writing speed of 4.5 m/min, an angle of 60°, a writing load of 40 g, no rotation, and intermittent writing of 1 round of writing and 1 round of non writing with a writing tester (Minitech writing tester, MITSUBISHI PENCIL COMPANY, LIMITED) in accordance with JIS standard: S6039-2001. The effect of suppression of dripping phenomenon at the time of 5 m writing was evaluated according to the following criteria.

### Evaluation criteria:

A: Good drawn line state with no drawn line dripping or attached dripping.
B: Good drawn line state with almost no drawn line dripping or attached dripping.
C: Noticeable dripping has occurred in either drawn line dripping or attached dripping.
D: Noticeable dripping has occurred in both of drawn line dripping and attached dripping, and drawn line was dirty.

### (Method for evaluating initial writing property (whether it is faint at the time of writing))

Using the oil-based ballpoint pen, writing with spiral writing was performed on a PPC paper, and initial writing property was evaluated according to the following evaluation criteria.

### Evaluation criteria:

A: Writable without problem from the start of writing
B: Faint writing of more than 0 mm and less than 5 mm from the start is confirmed
C: Faint writing of 5 mm or more from the start is confirmed

### (Method for evaluating quick drying property)

"Mitsubishi Pencil" was written on a PPC paper using the oil-based ballpoint pen, and immediately after that, the drawn line was faint with a hand to evaluate the quick drying property according to the following evaluation criteria.

### Evaluation criteria:

A: The ink of the drawn line does not stretch at all, and the drawn line state is good.
B: The ink of the drawn line is slightly stretched.
C: The ink of the drawn line is considerably stretched.

### (Method for evaluating line skipping)

Using the oil-based ballpoint pen and a writing tester (Minitech Writing Tester, MITSUBISHI PENCIL COMPANY, LIMITED) in accordance with JIS standard:S6039-2001, line skipping when writing was performed with a writing speed of 6.0 m/min, an angle of 60°, a writing load of 100 g, with rotation, and continuous writing of 100 m was evaluated according to the following evaluation criteria.

### Evaluation criteria:

A: No line skipping has occurred in the written line.
B: Partial line skipping has occurred in the written line.
C: Line skipping has occurred in the entire written line.

### (Improving effect of bleed-through property)

Using the oil-based ballpoint pen, a writing test was performed by spirally writing on a writing test paper in accordance with JIS standard P3201 under the conditions of a writing speed of 2.25 m/min, an angle of 60°, a writing load of 200 g, with rotation, and continuous writing with a writing tester (Minitech writing tester, MITSUBISHI PENCIL COMPANY, LIMITED) in accordance with JIS standard: S6039-2001. The bleed-through property of 100 m writing to paper to be a writing surface was performed was evaluated according to the following evaluation criteria. The bleed-through property was determined based on whether the drawn line is observed dark.

### Evaluation criteria:

A: No ink bleed-through is observed.
B: A dark portion is observed in a part of the drawn line.
C: A dark portion is observed in about a half of the drawn line.
D: A dark portion is observed in the entire drawn line.

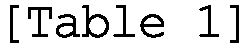

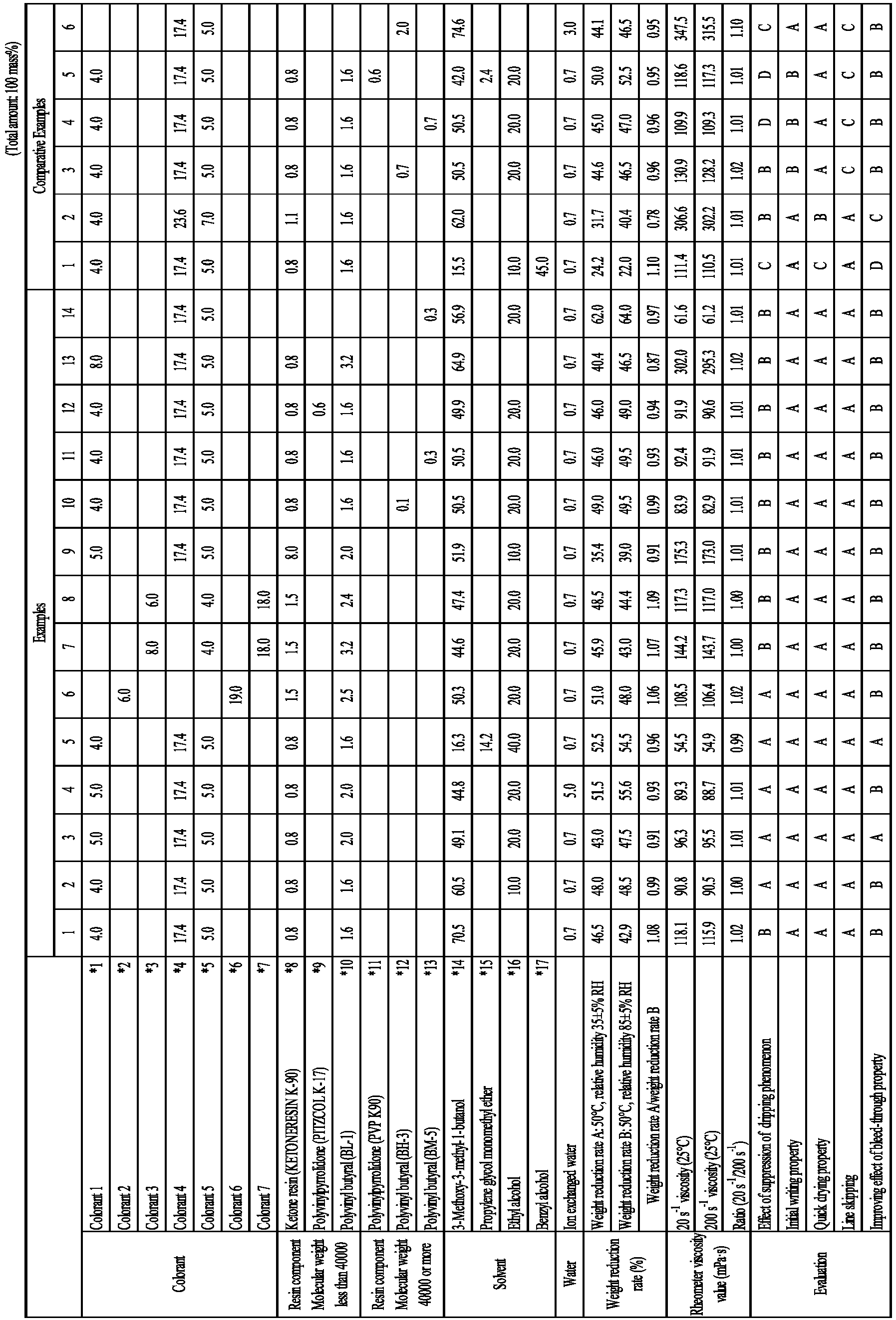

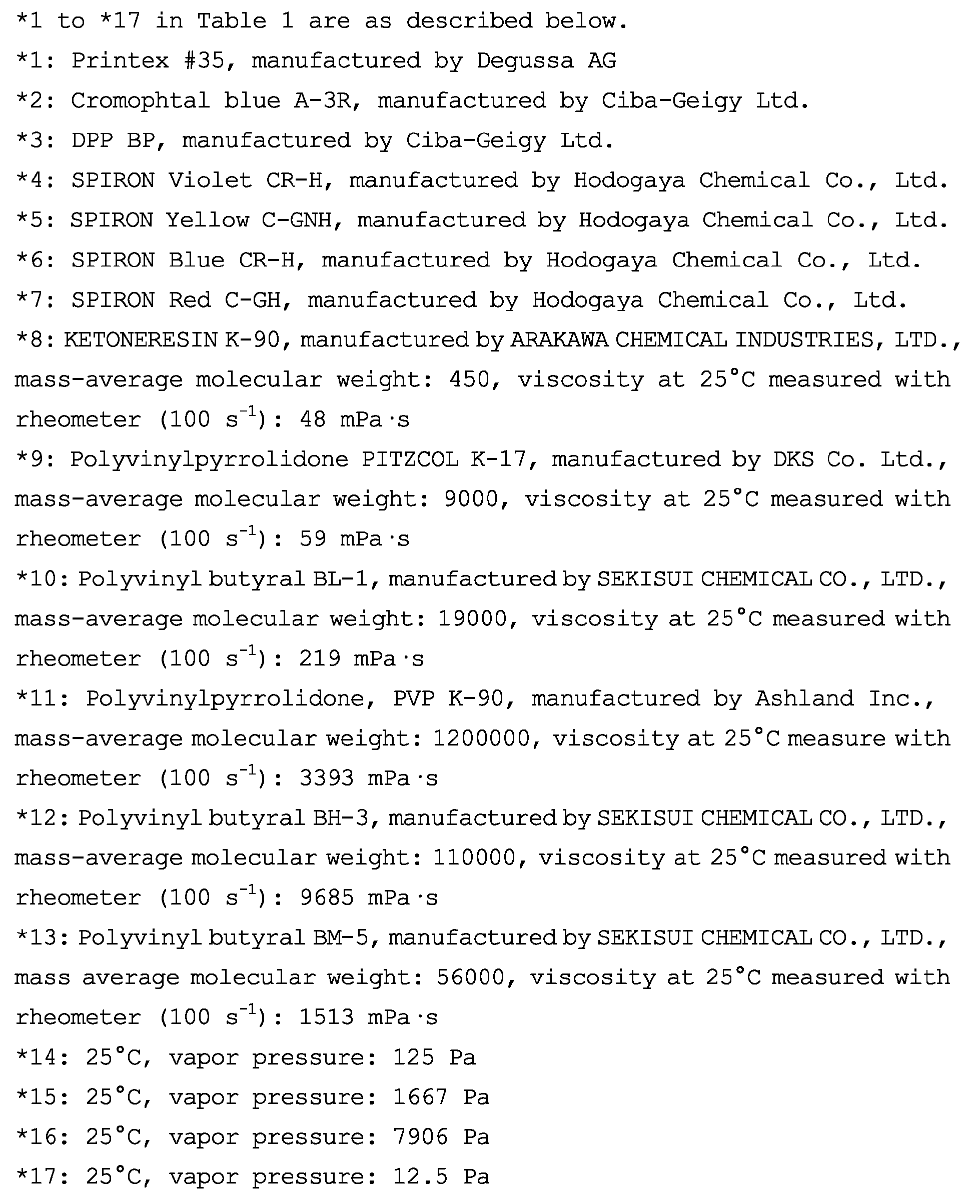

As is apparent from the results in Table 1, the oil-based ballpoint pen equipped with the oil-based ink composition for a ballpoint pen of Examples 1 to 14 which fall within the scope of the present disclosure, had an excellent effect of suppression of dripping phenomenon, had a smooth writing feeling, had a good initial writing property (not faint at the time of writing), had a quick drying property, had no ink stretch at the time of rubbing due to dripping, and had improved line skipping as compared with Comparative Examples 1 to 6 which fall outside the scope of the present disclosure. Thus, it was confirmed that a stable ink flow amount was able to be secured regardless of the ink flow amount design of the tip, and further, because of the suppression of dripping and the quick drying property, the bleed-through property was improved.

### Industrial Applicability

An oil-based ink composition for a ballpoint pen suitable for an oil-based ballpoint pen, and an oil-based ballpoint pen equipped with the ink composition are obtained.

## Claims

1. An oil-based ink composition for a ballpoint pen, the oil-based ink composition for a ballpoint pen comprising at least a colorant, a resin component, a solvent, and water, wherein
a content of the solvent and water is 40 mass% or more with respect to a total amount of the ink composition,
when a resin having a mass-average molecular weight of 40,000 or more is contained as the resin component, a content of the resin component is 0.5 mass% or less with respect to the total amount of the ink composition,
a weight reduction rate A when the ink composition is allowed to stand in an open state for 2 hours under an environment of 50°C and a relative humidity of 35±5%RH is 25% or more, and
a ratio A/B of the weight reduction rate A to a weight reduction rate B when the ink composition is allowed to stand in an open state for 2 hours under an environment of 50°C and a relative humidity of 85±5%RH is 0.8 to 1.2.

2. The oil-based ink composition for a ballpoint pen according to claim 1, the ink composition comprising a resin having a mass-average molecular weight of less than 40,000 as the resin component.

3. The oil-based ink composition for a ballpoint pen according to claim 1 or 2, the ink composition having a viscosity of 1 to 200 mPa·s at 25°C and at a shear rate between 200 and 2000 s⁻¹ as measured with a rheometer when a cone plate is used, and having a ratio represented by a viscosity at a shear rate of 20 s⁻¹/a viscosity at a shear rate of 200 s⁻¹ of 0.90 to 1.10 as measured with a rheometer at 25°C.

4. An oil-based ballpoint pen equipped with the oil-based ink composition for a ballpoint pen according to claim 1 or 2.
